# EUROPEAN PATENT APPLICATION

(11) **EP 4 379 707 A1**
(43) Date of publication of application: **05.06.2024**
(21) Application number: 23196251.5
(22) Date of filing: 08.09.2023
(51) Int. Cl.: G09G 5/00, G09G 5/02, G09G 5/04, G06F 9/4401

(54) **METHOD OF MANUFACTURING INFORMATION PROCESSING APPARATUS AND PROGRAM**

(30) Priority: 02.12.2022 JP 2022193626
(71) Applicant: Lenovo (Singapore) Pte. Ltd., New Tech Park 556741 (SG)
(72) Inventor: SHIBATANI, Junji, Yokohama-shi, 220-0012 (JP)
(74) Representative: Openshaw & Co.

(57) **Abstract**

The present disclosure aims to readily decide whether a display is the one which is supported by a color calibration application.

A method of manufacturing an information processing apparatus mainly includes the acquisition step (SA1) of acquiring, from a display which is to be loaded or is loaded on a main body of the information processing apparatus, display information which includes product information and color data on the display, the decision step (SA3) of deciding whether the display is an object to be supported on the basis of a plurality of pieces of support information that the product information on the display and additional information which indicates whether a predetermined color calibration application is to be supported are mutually correlated and the display information which is acquired, the device node creation step (SA4) of creating a predetermined device node which relates to installation of the color calibration application in a case where the display is the object to be supported, and the installation step (SA6) of installing the color calibration application in a case where the predetermined device node is created.

## Description

### BACKGROUND OF THE INVENTION

### Field of the Invention

The present disclosure relates to a method of manufacturing an information processing apparatus and a program.

### Description of the Related Art

Each display retains operating-environment-related specific information which is called EDID (Extended Display Identification Data). The EDID is also called extension display ID and is recorded in a storage such as a ROM and so forth that the display includes. Color data is registered in the EDID in addition to, for example, a manufacturer name, a model number, an individual identification number (a serial number), a screen physical size, the number of pixels to be displayed, an aspect ratio, a refresh rate and so forth. For example, color data on RGB(W) is measured per display and is registered in each piece of the EDID.

There exist individual differences in characteristics of panels, peripheral circuits and so forth that respective displays include and therefore there are cases where colors which are reproduced on the respective displays differ from one another. Accordingly, color management for reducing a variation in color reproducibility which is induced by individual differences among the respective displays is proposed.

### SUMMARY OF THE INVENTION

In information processing apparatuses such as, for example, a laptop PC, a tablet terminal and so forth which each loads a display, in steps of the method of manufacturing each of these information processing apparatuses, the step of installing color calibration application software (hereinafter, referred to as a "color calibration application") is prepared. However, it does not mean that the color calibration application supports all types of displays. Accordingly, it becomes preferable to set up the step of deciding whether the display which is to be loaded or is loaded on the main body of the information processing apparatus is an object to be supported by the color calibration application.

The present disclosure aims to provide the method of manufacturing the information processing apparatus and the program which make it possible to readily decide whether the display in question is supported by the color calibration application.

A method of manufacturing an information processing apparatus which loads a display according to the first aspect which is given as one reference example of the present disclosure includes the steps of acquiring, from a display which is to be loaded or is loaded on a main body of the information processing apparatus, display information which includes product information and color data on the display, deciding whether the display is an object to be supported on the basis of a plurality of pieces of support information that the product information on the display and additional information which indicates whether a predetermined color calibration application is to be supported are mutually correlated and the display information which is acquired, creating a predetermined device node which relates to installation of the color calibration application in a case where the display is the object to be supported, and installing the color calibration application in a case where the predetermined device node is created, in which the step of acquiring the display information, the step of deciding the support object and the step of creating the device node are executed in accordance with a BIOS.

A program which is installed on an information processing apparatus which loads a display according to the second aspect which is given as another reference example of the present disclosure in which the program is configured to allow the information processing apparatus to make a BIOS execute an acquisition process of acquiring, from a display which is to be loaded or is loaded on a main body of the information processing apparatus, display information which includes product information and color data on the display, a decision process of deciding whether the display is an object to be supported on the basis of a plurality of pieces of support information that the product information on the display and additional information which indicates whether a predetermined color calibration application is to be supported are mutually correlated and the display information which is acquired and a device node creation process of creating a predetermined device node which relates to installation of the color calibration application in a case where the display is the object to be supported, in which the display information is EDID and the support information is configured in a format which is the same as the format of EDID and the additional information is set as flag information.

According to the present disclosure, such an effect that it becomes possible to readily decide whether the display in question is supported by the color calibration application is exhibited.

### BRIEF DESCRIPTION OF THE DRAWINGS

FIG. 1 is a schematic configuration diagram illustrating one example of a hardware configuration of an information processing apparatus according to one embodiment of the present disclosure.
FIG. 2 is a functional configuration diagram mainly illustrating one example of a function which relates to installation of the color calibration application in functions that the information processing apparatus according to one embodiment of the present disclosure has in the steps of a method of manufacturing the information processing apparatus.
FIG. 3 is a flowchart illustrating one example of various steps which relate to the steps of the method of manufacturing the information processing apparatus according to one embodiment of the present disclosure and mainly relate to installation of the color calibration application.

### DETAILED DESCRIPTION OF THE INVENTION

In the following, a method of manufacturing an information processing apparatus according to one embodiment of the present disclosure and a program which is installed into the information processing apparatus will be described with reference to the drawings. In one embodiment, the information processing apparatus targets at, in particular, an information processing apparatus of the type which loads a display and a laptop PC, a tablet terminal and so forth are given as examples of the information processing apparatus of the type which loads the display.

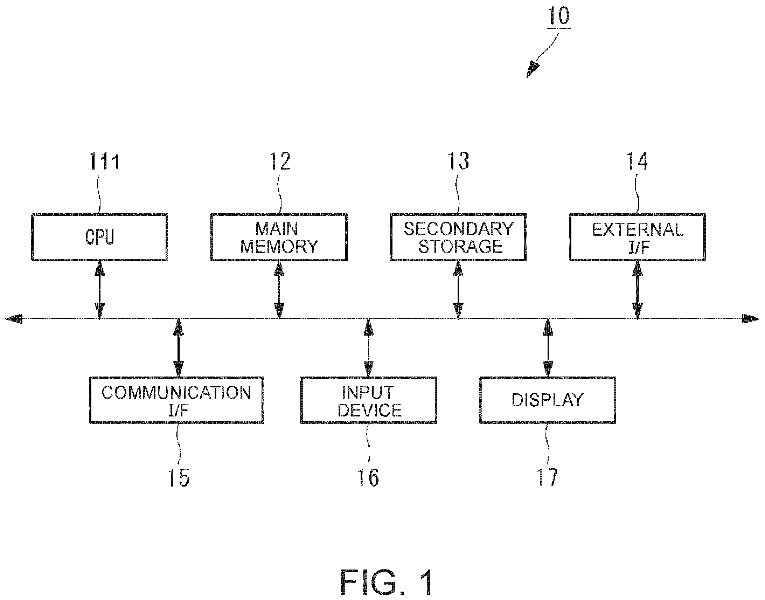

FIG. 1 is a diagram illustrating one example of a schematic configuration of hardware of the information processing apparatus 10 which is configured as a finished product according to one embodiment of the present disclosure. As illustrated in FIG. 1, the information processing apparatus 10 includes, for example, a CPU (Central Processing Unit) 11, a main memory 12, a secondary storage 13, an external interface 14, a communication interface 15, an input device 16 and a display 17. These constitutional elements are directly or indirectly connected together via a bus.

The CPU 11 controls the entire operation of the information processing apparatus 10 in accordance with, for example, an OS (Operating System) which is stored in the secondary storage 23 which is connected with the CPU 11 via the bus. One CPU 11 or a plurality of the CPUs 11 is installed and these CPUs 11 may execute processing in cooperation with one another.

The main memory 12 is configured by a writable memory such as, for example, a cache memory, a RAM (Random Access Memory) and so forth and is utilized as a work area out of which a program which is executed by the CPU 11 is read and into which data which is processed in accordance with the program that the CPU 11 executes is written and so forth.

The secondary storage 13 is a non-transitory computer readable storage medium. As the secondary storage 13, for example, a magnetic disk, a magneto-optical disk, a CD-ROM, a DVD-ROM, a semiconductor memory and so forth are given. As examples of the secondary storage 13, flash memories such as a ROM (Read Only Memory), an HDD (Hard Disk Drive), an SSD (Solid State Drive) and others are given. OSes such as, for example, Windows (registered trademark), iOS (registered trademark), Android (registered trademark) and so forth which are used for controlling the entire operation of the information processing apparatus 10, a BIOS (Basic Input/Output System) and so forth are stored in the secondary storage 13. In addition, it is possible to store various device drivers, various types of application software, various types of data, various files and so forth which are used for operating peripherals in a hardware-based state in the secondary storage 13. In addition, programs for realizing various processes and various types of data which are preferable to realize the various processes are stored in the secondary storage 13. A plurality of the secondary storages 13 may be installed and the programs and data of the types which are described above may be stored in the respective secondary storages 13 in a divided state.

The external interface 14 is used for connecting the information processing apparatus 10 with an external apparatus. As examples of the external apparatus, an external monitor, a USB memory, an externally-attached HDD, an externally-attached camera and so forth are given. Incidentally, although only one external interface 14 is illustrated in the example in FIG. 1, a plurality of the external interfaces 14 may be installed. The external interface 14 includes, for example, input and output terminals and interfaces of the types which are appropriately used depending on the apparatus which is connected with the information processing apparatus 10.

The communication interface 15 functions as an interface which is connected with a network so as to communicate with other devices and to preform information transmission and reception together with other devices. The communication interface 15 communicates with other devices, for example, in a wired state or in a wireless state. As examples of wireless communication, several types of communication via lines such as Bluetooth (registered trademark), Wi-Fi, mobile communication systems (3G, 4G, 5G, 6G, LTE and so forth), a wireless LAN (Local Area Network) and so forth are given. As examples of wired communication, several types of communication via lines such as a wired LAN (Local Area Network) and so forth are given.

The input device 16 is a user interface which is used by a user for performing an inputting operation. As examples of the input device 16, a keyboard, a pointing device and so forth are given. As examples of the pointing device, a touch pad, a pointing stick (for example, a track point and so forth) and others are given.

The display 17 is, for example, an LCD (Liquid Crystal Display), an organic EL (Electroluminescence) display and so forth. In addition, the display 17 may be in the form of a touch panel.

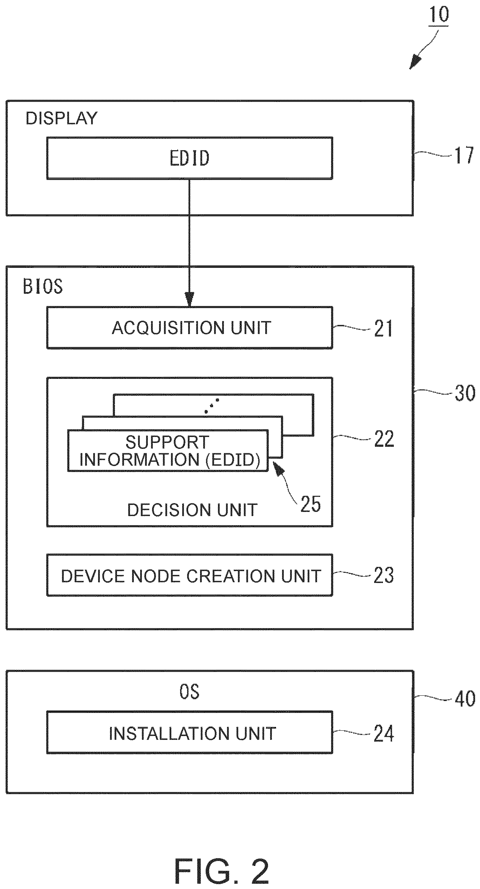

FIG. 2 is a functional configuration diagram mainly illustrating one example of a function which relates to installation of the color calibration application in the steps of the method of manufacturing the information processing apparatus 10 in functions that the information processing apparatus 10 according to one embodiment of the present disclosure has.

As illustrated in FIG. 2, the information processing apparatus 10 includes an acquisition unit 21, a decision unit 22, a device node creation unit 23 and an installation unit 24. In these units, the acquisition unit 21, the decision unit 22 and the device node creation unit 23 are functions that a BIOS 30 mainly has. In addition, the installation unit 24 is a function which is realized by executing a predetermined application (for example, an installer) in accordance with an OS 40.

The acquisition unit 21 acquires display information which includes product information and color data on the display 17 from the display 17 which is to be loaded or is loaded on the main body of the information processing apparatus 10.

For example, EDID is stored in a storage such as a ROM and so forth that the display 17 includes. Manufacturing information, color data and so forth are contained in the EDID. As examples of the manufacturing information, information which indicates the model of the display 17, the model number of the display 17 and so forth are given. As examples of the color data, RGB color data, RGBW color data and so forth are given. The color data is specific to the display 17 and is measured and registered, for example, per display. For example, a physical size of a screen of the display 17, the number of pixels to be displayed on the display 17, an aspect ratio of the display 17, a refresh rate of the display 17 and so forth may be contained in the EDID other than the above-described information.

The decision unit 22 has a plurality of pieces of support information 25 that the product information on the display 17 and additional information which indicates whether or not to support a predetermined color calibration application are mutually correlated. Each piece of the support information 25 is configured in a format which is the same as the format of, for example, the EDID and the additional information is set as flag information in each piece of the support information 25. For example, in the support information 25 on one display which is the object to be supported, "1" is set as the flag information and in the support information 25 on another display which is not the object to be supported, "0" is set as the flag information.

The decision unit 22 decides whether the display 17 which is to be loaded or is loaded on the main body of the information processing apparatus 10 is the object to be supported on the basis of the display information and the plurality of pieces of support information 25 which is acquired by the acquisition unit 21. Specifically, the decision unit 22 specifies one piece of the support information which corresponds to the product information which is contained in the EDID on the display 17 which is acquired by the acquisition unit 21 from within the plurality of pieces of support information and acquires the flag information in the support information which is specified. In a case where the flag information is "1", the decision unit 22 decides that the display 17 is the object to be supported. In a case where the flag information is "0", the decision unit 22 decides that the display 17 is not the object to be supported.

In a case where the display 17 is decided as the object to be supported by the decision unit 22, the device node creation unit 23 creates a predetermined device node which relates to installation of the color calibration application.

In a case where the predetermined device node is created, the installation unit 24 installs the color calibration application. The installation unit 24 is, for example, software (for example, the installer) which is implemented as a driver on the OS 40.

The color calibration application has, for example, a function of reducing a variation in color reproduction which is induced by a difference among individual displays. More specifically, the color calibration application has, for example, a function of creating color space information (for example, an ICC profile) which relates to color management for realizing color reproducibility on the basis of color data which is contained in the EDID which is acquired from the display 17. Since the color calibration application functions to create the color space information on the basis of the color data which is specific to each display 17 in this way, it becomes possible to reduce the variation in color reproducibility among the displays.

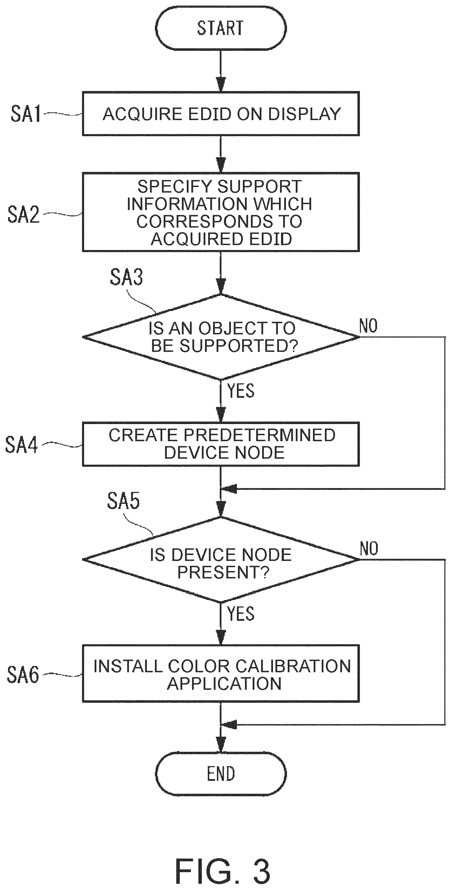

Next, the steps of the method of manufacturing the information processing apparatus 10 according to one embodiment of the present disclosure, mainly, various steps which relate to installation of the color calibration application will be described with reference to FIG. 3. FIG. 3 is a flowchart illustrating one example of various steps which relate to the steps of the method of manufacturing the information processing apparatus 10 and mainly relate to installation of the color calibration application.

As illustrated in FIG. 3, first, the BIOS 30 which is set up in the information processing apparatus 10 functions to acquire the EDID from the display 17 which is to be loaded or is loaded on the main body of the information processing apparatus 10 (SA1). Then, the BIOS 30 functions to specify one piece of the support information 25 which corresponds to the EDID on the display 17 from within the plurality of pieces of support information (SA2) and then to decide whether the display 17 is the object to be supported on the basis of the flag information in the support information 25 which is specified (SA3). In a case where the display 17 is the object to be supported (SA3: YES), the BIOS 30 functions to create a predetermined device node which relates to installation of the color calibration information (SA4) and then to proceed the process to Step SA5. On the other hand, in a case where the display 17 is not the object to be supported (SA3: NO), the BIOS 30 functions to proceed the process to Step SA5 without creating the predetermined device node which relates to installation of the color calibration application.

Then, the installer which operates on the OS 40 functions to decide whether the predetermined device node is created (SA5). As a result of this decision making, in a case where the predetermined device node is created (SA5: YES), the installer functions to install the color calibration application (SA6) and then to terminate execution of this process. For example, this process is executed in the preinstallation step in the steps of the method of manufacturing the information processing apparatus 10.

On the other hand, in a case where the predetermined device node is not created (SA5: NO), the installer functions to terminate execution of this installation process with no installation of the color calibration application.

As described above, according to one embodiment of the present disclosure, the BIOS 30 holds, in advance, the plurality of pieces of support information which corresponds to the various displays and, further, the additional information which indicates whether the display in question is the object to be supported is registered in one piece of the support information. Thereby, it becomes possible to readily discriminate whether the display 17 is the object to be supported by confirming the additional information in the support information which corresponds to the display 17 which is to be loaded or is loaded on the main body of the information processing apparatus 10.

For example, it is also conceivable to decide whether the display 17 which is to be loaded or is loaded on the main body of the information processing apparatus 10 is the object to be supported by using software such as, for example, the installer or the like which is implemented on the OS 40. However, in this case, every time one display of a new model is added as the display 17, it becomes unavoidable to update the application of the installer and it is requested to perform complicated work. On the other hand, according to one embodiment of the present disclosure, whether the display in question is the object to be supported is decided on the basis of the flag information in the support information that the BIOS 30 manages. Accordingly, in a case where the display of the new model is added as the display 17 as described above, it becomes possible to cope with this situation by performing simple work of adding support information which corresponds to the model of the display which is newly added to the BIOS 30 as the display 17. Thereby, it becomes possible to eliminate execution of complicated work which is called application updating work.

Although the present disclosure has been described as above by using one embodiment, the technical scope of the present disclosure is not limited to the scope which is described in the above embodiment. It is possible to add various alterations and improvements to the embodiment within a range not deviating from the gist of the present disclosure and also forms which are altered or improved fall within the technical scope of the present disclosure. In addition, the forms which are altered or improved may be mutually combined appropriately.

In addition, also the flow of information presentation processing which is described in one embodiment of the present disclosure is merely one example and an unnecessary step may be deleted, a new step may be added and the order of the respective processes to be executed may be changed within the range not deviating from the gist of the present disclosure.

### Description of Symbols

- 10: information processing apparatus
- 11: CPU
- 12: main memory
- 13: secondary storage
- 14: external interface
- 15: communication interface
- 16: input device
- 17: display
- 21: acquisition unit
- 22: decision unit
- 23: device node creation unit
- 24: installation unit
- 25: support information
- 30: BIOS
- 40: OS

## Claims

1. A method of manufacturing an information processing apparatus that a display is loaded comprising the steps of:
acquiring, from a display which is to be loaded or is loaded on a main body of the information processing apparatus, display information which includes product information and color data on the display;
deciding whether the display is an object to be supported on the basis of a plurality of pieces of support information that the product information on the display and additional information which indicates whether a predetermined color calibration application is to be supported are mutually correlated and the display information which is acquired;
creating a predetermined device node which relates to installation of the color calibration application in a case where the display is the object to be supported; and
installing the color calibration application in a case where the predetermined device node is created, wherein
the step of acquiring the display information, the step of deciding the support object and the step of creating the device node are executed in accordance with a BIOS.

2. The method of manufacturing the information processing apparatus according to claim 1, wherein
the display information is EDID and
the support information is configured in a format which is the same as the format of the EDID and the additional information is set as flag information.

3. The method of manufacturing the information processing apparatus according to claim 1 or 2, wherein
in the step of deciding the support object, one piece of the support information which corresponds to manufacturing information which is contained in the EDID on the display is specified from within the plurality of pieces of the support information and whether the display is the object to be supported is decided on the basis of the flag information in the support information which is specified.

4. The method of manufacturing the information processing apparatus according to claim 1, 2 or 3, wherein
the color calibration application has a function of generating color space information which relates to color management for realizing color reproducibility on the basis of the display information which is acquired from the display.

5. A program for installation on an information processing apparatus which loads a display,
wherein the program is configured to allow the information processing apparatus to make BIOS execute:
an acquisition process of acquiring, from a display which is to be loaded or is loaded on a main body of the information processing apparatus, display information which includes product information and color data on the display;
a decision process of deciding whether the display is an object to be supported on the basis of a plurality of pieces of support information that the product information on the display and additional information which indicates whether a predetermined color calibration application is to be supported are mutually correlated and the display information which is acquired; and
a device node creation process of creating a predetermined device node which relates to installation of the color calibration application in a case where the display is the object to be supported, wherein
the display information is EDID and
the support information is configured in a format which is the same as the format of EDID and the additional information is set as flag information.

6. The program according to claim 5, wherein
the display information is EDID and
the support information is configured in a format which is the same as the format of the EDID and the additional information is set as flag information.

7. The program according to claim 5 or 6, wherein
in the step of deciding the support object, one piece of the support information which corresponds to manufacturing information which is contained in the EDID on the display is specified from within the plurality of pieces of the support information and whether the display is the object to be supported is decided on the basis of the flag information in the support information which is specified.

8. The program according to claim 5, 6 or 7, wherein
the color calibration application has a function of generating color space information which relates to color management for realizing color reproducibility on the basis of the display information which is acquired from the display.
